# EUROPEAN PATENT SPECIFICATION

(11) **EP 2 866 582 B1**
(45) Date of publication and mention of the grant of the patent: **14.11.2018**
(21) Application number: 13731346.6
(22) Date of filing: 25.06.2013
(51) Int. Cl.: A23L 7/104, A23L 7/196, A23L 5/10

(54) **RICE COOKING METHOD**
REISKOCHVERFAHREN
PROCÉDÉ DE CUISSON DE RIZ

(30) Priority: 27.06.2012 EP 12173793
(43) Date of publication of application: 06.05.2015
(73) Proprietor: Novozymes A/S, 2880 Bagsværd (DK)
(72) Inventor: NAKASHIMA, Noriyuki, Kawasaki Kanagawa 212-0058 (JP)
(74) Representative: NZ EPO Representatives
(86) International application number: PCT/EP2013/063308
(87) International publication number: WO 2014/001351

(56) References cited:
- EP-A1- 1 736 061
- EP-A2- 2 316 929
- WO-A1-00/58445
- JP-A- 60 083 551
- KR-A- 20070 099 900
- US-B1- 6 876 932
- CHANG-HO LEE ET AL: "Effects of starch hydrolysing enzymes on the textural properties of rice", FOODS AND BIOTECHNOLOGY, KR, vol. 4, no. 3, January 1995 (1995-01), pages 159-163, XP001526079, ISSN: 1225-5173

### SEQUENCE LISTING

<110> Novozymes A/S
<120> Rice cooking method
<130> 12424-WO-PCT
<160> 3
<170> PatentIn version 3.5
<210> 1
   <211> 2061
   <212> DNA
   <213> Bacillus stearothermophilus
<220>
   <221> CDS
   <222> (1)..(2061)
<400> 1
   agc agt tcc gca agc gtc aaa ggg gac gtg att tac cag att atc att         48
   Ser Ser Ser Ala Ser Val Lys Gly Asp Val Ile Tyr Gln Ile Ile Ile
   1               5                   10                  15
   gac cgg ttt tac gat ggg gac acg acg aac aac aat cct gcc aaa agt         96
   Asp Arg Phe Tyr Asp Gly Asp Thr Thr Asn Asn Asn Pro Ala Lys Ser
               20                  25                  30
   tat gga ctt tac gat ccg acc aaa tcg aag tgg aaa atg tat tgg ggc        144
   Tyr Gly Leu Tyr Asp Pro Thr Lys Ser Lys Trp Lys Met Tyr Trp Gly
           35                  40                  45
   ggg gat ctg gag ggg gtt cgt caa aaa ctt cct tat ctt aaa cag ctg        192
   Gly Asp Leu Glu Gly Val Arg Gln Lys Leu Pro Tyr Leu Lys Gln Leu
       50                  55                  60
   ggc gta acg aca atc tgg ttg tcc ccg gtt ttg gac aat ctg gat aca        240
   Gly Val Thr Thr Ile Trp Leu Ser Pro Val Leu Asp Asn Leu Asp Thr
   65                  70                  75                  80
   ctg gcg ggc acc gat aac acg ggc tat cac gga tac tgg acg cgc gat        288
   Leu Ala Gly Thr Asp Asn Thr Gly Tyr His Gly Tyr Trp Thr Arg Asp
                   85                  90                  95
   ttt aaa cag att gag gaa cat ttc ggg aat tgg acc aca ttt gac acg        336
   Phe Lys Gln Ile Glu Glu His Phe Gly Asn Trp Thr Thr Phe Asp Thr
               100                 105                 110
   ttg gtc aat gat gct cac caa aac gga atc aag gtg att gtc gac ttt        384
   Leu Val Asn Asp Ala His Gln Asn Gly Ile Lys Val Ile Val Asp Phe
           115                 120                 125
   gtg ccc aat cat tcg act cct ttt aag gca aac gat tcc acc ttt gcg        432
   Val Pro Asn His Ser Thr Pro Phe Lys Ala Asn Asp Ser Thr Phe Ala
       130                 135                 140
   gaa ggc ggc gcc ctc tac aac aat gga acc tat atg ggc aat tat ttt        480
   Glu Gly Gly Ala Leu Tyr Asn Asn Gly Thr Tyr Met Gly Asn Tyr Phe
   145                 150                 155                 160
   gat gac gca aca aaa ggg tac ttc cac cat aat ggg gac atc agc aac        528
   Asp Asp Ala Thr Lys Gly Tyr Phe His His Asn Gly Asp Ile Ser Asn
                   165                 170                 175
   tgg gac gac cgg tac gag gcg caa tgg aaa aac ttc acg gat cca gcc        576
   Trp Asp Asp Arg Tyr Glu Ala Gln Trp Lys Asn Phe Thr Asp Pro Ala
               180                 185                 190
   ggt ttc tcg ctt gcc gat ttg tcg cag gaa aat ggc acg att gct caa        624
   Gly Phe Ser Leu Ala Asp Leu Ser Gln Glu Asn Gly Thr Ile Ala Gln
           195                 200                 205
   tac ctg acc gat gcg gcg gtt caa ttg gta gca cat gga gcg gat ggt        672
   Tyr Leu Thr Asp Ala Ala Val Gln Leu Val Ala His Gly Ala Asp Gly
       210                 215                 220
   ttg cgg att gat gcg gtg aag cat ttt aat tcg ggg ttc tcc aaa tcg        720
   Leu Arg Ile Asp Ala Val Lys His Phe Asn Ser Gly Phe Ser Lys Ser
   225                 230                 235                 240
   ttg gcc gat aaa ctg tac caa aag aaa gac att ttc ctg gtg ggg gaa        768
   Leu Ala Asp Lys Leu Tyr Gln Lys Lys Asp Ile Phe Leu Val Gly Glu
                   245                 250                 255
   tgg tac gga gat gac ccc gga aca gcc aat cat ctg gaa aag gtc cgg        816
   Trp Tyr Gly Asp Asp Pro Gly Thr Ala Asn His Leu Glu Lys Val Arg
               260                 265                 270
   tac gcc aac aac agc ggt gtc aat gtg ctg gat ttt gat ctc aac acg        864
   Tyr Ala Asn Asn Ser Gly Val Asn Val Leu Asp Phe Asp Leu Asn Thr
           275                 280                 285
   gtg att cga aat gtg ttc ggc aca ttt acg caa acg atg tac gat ctt        912
   Val Ile Arg Asn Val Phe Gly Thr Phe Thr Gln Thr Met Tyr Asp Leu
       290                 295                 300
   aac aat atg gtg aac caa acg ggg aac gag tac aaa tac aaa gaa aat        960
   Asn Asn Met Val Asn Gln Thr Gly Asn Glu Tyr Lys Tyr Lys Glu Asn
   305                 310                 315                 320
   cta atc aca ttt atc gat aac cat gat atg tca aga ttt ctt tcg gta       1008
   Leu Ile Thr Phe Ile Asp Asn His Asp Met Ser Arg Phe Leu Ser Val
                   325                 330                 335
   aat tcg aac aag gcg aat ttg cac cag gcg ctt gct ttc att ctc act       1056
   Asn Ser Asn Lys Ala Asn Leu His Gln Ala Leu Ala Phe Ile Leu Thr
               340                 345                 350
   tcg cgg ggt acg ccc tcc atc tat tat gga acc gaa caa tac atg gca       1104
   Ser Arg Gly Thr Pro Ser Ile Tyr Tyr Gly Thr Glu Gln Tyr Met Ala
           355                 360                 365
   ggc ggc aat gac ccg tac aac cgg ggg atg atg ccg gcg ttt gat acg       1152
   Gly Gly Asn Asp Pro Tyr Asn Arg Gly Met Met Pro Ala Phe Asp Thr
       370                 375                 380
   aca acc acc gcc ttt aaa gag gtg tca act ctg gcg ggg ttg cgc agg       1200
   Thr Thr Thr Ala Phe Lys Glu Val Ser Thr Leu Ala Gly Leu Arg Arg
   385                 390                 395                 400
   aac aat gcg gcg atc cag tac ggc acc acc acc cag cgt tgg atc aac       1248
   Asn Asn Ala Ala Ile Gln Tyr Gly Thr Thr Thr Gln Arg Trp Ile Asn
                   405                 410                 415
   aat gat gtt tac att tat gaa cgg aaa ttt ttc aac gat gtc gtg ttg        1296
   Asn Asp Val Tyr Ile Tyr Glu Arg Lys Phe Phe Asn Asp Val Val Leu
               420                 425                 430
   gtg gcc atc aat cga aac acg caa tcc tcc tat tcg att tcc ggt ttg        1344
   Val Ala Ile Asn Arg Asn Thr Gln Ser Ser Tyr Ser Ile Ser Gly Leu
           435                 440                 445
   cag acg gcc ttg cca aat ggc agc tat gcg gat tat ctg tca ggg ctg        1392
   Gln Thr Ala Leu Pro Asn Gly Ser Tyr Ala Asp Tyr Leu Ser Gly Leu
       450                 455                 460
   ttg ggg ggg aac ggg att tcc gtt tcc aat gga agt gtc gct tcg ttc        1440
   Leu Gly Gly Asn Gly Ile Ser Val Ser Asn Gly Ser Val Ala Ser Phe
   465                 470                 475                 480
   acg ctt gcg cct gga gcc gtg tct gtt tgg cag tac agc aca tcc gct        1488
   Thr Leu Ala Pro Gly Ala Val Ser Val Trp Gln Tyr Ser Thr Ser Ala
                   485                 490                 495
   tca gcg ccg caa atc gga tcg gtt gct cca aat atg ggg att ccg ggt        1536
   Ser Ala Pro Gln Ile Gly Ser Val Ala Pro Asn Met Gly Ile Pro Gly
               500                 505                 510
   aat gtg gtc acg atc gac ggg aaa ggt ttt ggg acg acg cag gga acc        1584
   Asn Val Val Thr Ile Asp Gly Lys Gly Phe Gly Thr Thr Gln Gly Thr
           515                 520                 525
   gtg aca ttt ggc gga gtg aca gcg act gtg aaa tcc tgg aca tcc aat        1632
   Val Thr Phe Gly Gly Val Thr Ala Thr Val Lys Ser Trp Thr Ser Asn
       530                 535                 540
   cgg att gaa gtg tac gtt ccc aac atg gcc gcc ggg ctg acc gat gtg        1680
   Arg Ile Glu Val Tyr Val Pro Asn Met Ala Ala Gly Leu Thr Asp Val
   545                 550                 555                 560
   aaa gtc acc gcg ggt gga gtt tcc agc aat ctg tat tct tac aat att        1728
   Lys Val Thr Ala Gly Gly Val Ser Ser Asn Leu Tyr Ser Tyr Asn Ile
                   565                 570                 575
   ttg agt gga acg cag aca tcg gtt gtg ttt act gtg aaa agt gcg cct        1776
   Leu Ser Gly Thr Gln Thr Ser Val Val Phe Thr Val Lys Ser Ala Pro
               580                 585                 590
   ccg acc aac ctg ggg gat aag att tac ctg acg ggc aac ata ccg gaa        1824
   Pro Thr Asn Leu Gly Asp Lys Ile Tyr Leu Thr Gly Asn Ile Pro Glu
           595                 600                 605
   ttg ggg aat tgg agc acg gat acg agc gga gcc gtt aac aat gcg caa        1872
   Leu Gly Asn Trp Ser Thr Asp Thr Ser Gly Ala Val Asn Asn Ala Gln
       610                 615                 620
   ggg ccc ctg ctc gcg ccc aat tat ccg gat tgg ttt tat gta ttc agc        1920
   Gly Pro Leu Leu Ala Pro Asn Tyr Pro Asp Trp Phe Tyr Val Phe Ser
   625                 630                 635                 640
   gtt cca gca gga aag acg att caa ttc aag ttc ttc atc aag cgt gcg        1968
   Val Pro Ala Gly Lys Thr Ile Gln Phe Lys Phe Phe Ile Lys Arg Ala
                   645                 650                 655
   gat gga acg att caa tgg gag aat ggt tcg aac cac gtg gcc aca act        2016
   Asp Gly Thr Ile Gln Trp Glu Asn Gly Ser Asn His Val Ala Thr Thr
                   660                 665                 670
   ccc acg ggt gca acc ggt aac att act gtt acg tgg caa aac tag            2061
   Pro Thr Gly Ala Thr Gly Asn Ile Thr Val Thr Trp Gln Asn
               675                 680                 685
<210> 2
   <211> 686
   <212> PRT
   <213> Bacillus stearothermophilus
<400> 2
   Ser Ser Ser Ala Ser Val Lys Gly Asp Val Ile Tyr Gln Ile Ile Ile
   1 5 10 15
   Asp Arg Phe Tyr Asp Gly Asp Thr Thr Asn Asn Asn Pro Ala Lys Ser
   20 25 30
   Tyr Gly Leu Tyr Asp Pro Thr Lys Ser Lys Trp Lys Met Tyr Trp Gly
   35 40 45
   Gly Asp Leu Glu Gly Val Arg Gln Lys Leu Pro Tyr Leu Lys Gln Leu
   50 55 60
   Gly Val Thr Thr Ile Trp Leu Ser Pro Val Leu Asp Asn Leu Asp Thr
   65 70 75 80
   Leu Ala Gly Thr Asp Asn Thr Gly Tyr His Gly Tyr Trp Thr Arg Asp
   85 90 95
   Phe Lys Gln Ile Glu Glu His Phe Gly Asn Trp Thr Thr Phe Asp Thr
   100 105 110
   Leu Val Asn Asp Ala His Gln Asn Gly Ile Lys Val Ile Val Asp Phe
   115 120 125
   Val Pro Asn His Ser Thr Pro Phe Lys Ala Asn Asp Ser Thr Phe Ala
   130 135 140
   Glu Gly Gly Ala Leu Tyr Asn Asn Gly Thr Tyr Met Gly Asn Tyr Phe
   145 150 155 160
   Asp Asp Ala Thr Lys Gly Tyr Phe His His Asn Gly Asp Ile Ser Asn
   165 170 175
   Trp Asp Asp Arg Tyr Glu Ala Gln Trp Lys Asn Phe Thr Asp Pro Ala
   180 185 190
   Gly Phe Ser Leu Ala Asp Leu Ser Gln Glu Asn Gly Thr Ile Ala Gln
               195                 200                 205
   Tyr Leu Thr Asp Ala Ala Val Gln Leu Val Ala His Gly Ala Asp Gly
           210                 215                 220
   Leu Arg Ile Asp Ala Val Lys His Phe Asn Ser Gly Phe Ser Lys Ser
   225                 230                 235                 240
   Leu Ala Asp Lys Leu Tyr Gln Lys Lys Asp Ile Phe Leu Val Gly Glu
                   245                 250                 255
   Trp Tyr Gly Asp Asp Pro Gly Thr Ala Asn His Leu Glu Lys Val Arg
               260                 265                 270
   Tyr Ala Asn Asn Ser Gly Val Asn Val Leu Asp Phe Asp Leu Asn Thr
               275                 280                 285
   Val Ile Arg Asn Val Phe Gly Thr Phe Thr Gln Thr Met Tyr Asp Leu
           290                 295                 300
   Asn Asn Met Val Asn Gln Thr Gly Asn Glu Tyr Lys Tyr Lys Glu Asn
   305                 310                 315                 320
   Leu Ile Thr Phe Ile Asp Asn His Asp Met Ser Arg Phe Leu Ser Val
                   325                 330                 335
   Asn Ser Asn Lys Ala Asn Leu His Gln Ala Leu Ala Phe Ile Leu Thr
               340                 345                 350
   Ser Arg Gly Thr Pro Ser Ile Tyr Tyr Gly Thr Glu Gln Tyr Met Ala
               355                 360                 365
   Gly Gly Asn Asp Pro Tyr Asn Arg Gly Met Met Pro Ala Phe Asp Thr
           370                 375                 380
   Thr Thr Thr Ala Phe Lys Glu Val Ser Thr Leu Ala Gly Leu Arg Arg
   385                 390                 395                 400
   Asn Asn Ala Ala Ile Gln Tyr Gly Thr Thr Thr Gln Arg Trp Ile Asn
                   405                 410                 415
   Asn Asp Val Tyr Ile Tyr Glu Arg Lys Phe Phe Asn Asp Val Val Leu
               420                 425                 430
   Val Ala Ile Asn Arg Asn Thr Gln Ser Ser Tyr Ser Ile Ser Gly Leu
               435                 440                 445
   Gln Thr Ala Leu Pro Asn Gly Ser Tyr Ala Asp Tyr Leu Ser Gly Leu
       450                 455                 460
   Leu Gly Gly Asn Gly Ile Ser Val Ser Asn Gly Ser Val Ala Ser Phe
   465                 470                 475                 480
   Thr Leu Ala Pro Gly Ala Val Ser Val Trp Gln Tyr Ser Thr Ser Ala
                   485                 490                 495
   Ser Ala Pro Gln Ile Gly Ser Val Ala Pro Asn Met Gly Ile Pro Gly
               500                 505                 510
   Asn Val Val Thr Ile Asp Gly Lys Gly Phe Gly Thr Thr Gln Gly Thr
           515                 520                 525
   Val Thr Phe Gly Gly Val Thr Ala Thr Val Lys Ser Trp Thr Ser Asn
       530                 535                 540
   Arg Ile Glu Val Tyr Val Pro Asn Met Ala Ala Gly Leu Thr Asp Val
   545                 550                 555                 560
   Lys Val Thr Ala Gly Gly Val Ser Ser Asn Leu Tyr Ser Tyr Asn Ile
                   565                 570                 575
   Leu Ser Gly Thr Gln Thr Ser Val Val Phe Thr Val Lys Ser Ala Pro
               580                 585                 590
   Pro Thr Asn Leu Gly Asp Lys Ile Tyr Leu Thr Gly Asn Ile Pro Glu
           595                 600                 605
   Leu Gly Asn Trp Ser Thr Asp Thr Ser Gly Ala Val Asn Asn Ala Gln
       610                 615                 620
   Gly Pro Leu Leu Ala Pro Asn Tyr Pro Asp Trp Phe Tyr Val Phe Ser
   625                 630                 635                 640
   Val Pro Ala Gly Lys Thr Ile Gln Phe Lys Phe Phe Ile Lys Arg Ala
                   645                 650                 655
   Asp Gly Thr Ile Gln Trp Glu Asn Gly Ser Asn His Val Ala Thr Thr
               660                 665                 670
   Pro Thr Gly Ala Thr Gly Asn Ile Thr Val Thr Trp Gln Asn
           675                 680                 685
<210> 3
   <211> 621
   <212> PRT
   <213> Rhodothermus obamensis
<400> 3
   Met Ser Trp Leu Thr Glu Glu Asp Ile Arg Arg Trp Glu Ser Gly Thr
   1               5                   10                  15
   Phe Tyr Asp Ser Tyr Arg Lys Leu Gly Ala His Pro Asp Asp Glu Gly
               20                  25                  30
   Thr Trp Phe Cys Val Trp Ala Pro His Ala Asp Gly Val Ser Val Leu
           35                  40                  45
   Gly Ala Phe Asn Asp Trp Asn Pro Glu Ala Asn Pro Leu Glu Arg Tyr
       50                  55                  60
   Gly Gly Gly Leu Trp Ala Gly Tyr Val Pro Gly Ala Arg Pro Gly His
   65                  70                  75                  80
   Thr Tyr Lys Tyr Arg Ile Arg His Gly Phe Tyr Gln Ala Asp Lys Thr
                   85                  90                  95
   Asp Pro Tyr Ala Phe Ala Met Glu Pro Pro Thr Gly Ser Pro Ile Glu
               100                 105                 110
   Gly Leu Ala Ser Ile Ile Thr Arg Leu Asp Tyr Thr Trp His Asp Asp
           115                 120                 125
   Glu Trp Met Arg Arg Arg Lys Gly Pro Ala Ser Leu Tyr Glu Pro Val
       130                 135                 140
   Ser Ile Tyr Glu Val His Leu Gly Ser Trp Arg His Lys Arg Pro Gly
   145                 150                 155                 160
   Glu Ser Phe Ser Tyr Arg Glu Ile Ala Glu Pro Leu Ala Asp Tyr Val
                   165                 170                 175
   Gln Glu Met Gly Phe Thr His Val Glu Leu Leu Pro Val Met Glu His
               180                 185                 190
   Pro Tyr Tyr Gly Ser Trp Gly Tyr Gln Val Val Gly Tyr Tyr Ala Pro
           195                 200                 205
   Thr Phe Arg Tyr Gly Ser Pro Gln Asp Leu Met Tyr Leu Ile Asp Tyr
       210                 215                 220
   Leu His Gln Arg Gly Ile Gly Val Ile Leu Asp Trp Val Pro Ser His
   225                 230                 235                 240
   Phe Ala Ala Asp Pro Gln Gly Leu Val Phe Phe Asp Gly Thr Thr Leu
                   245                 250                 255
   Phe Glu Tyr Asp Asp Pro Lys Met Arg Tyr His Pro Asp Trp Gly Thr
               260                 265                 270
   Tyr Val Phe Asp Tyr Asn Lys Pro Gly Val Arg Asn Phe Leu Ile Ser
           275                 280                 285
   Asn Ala Leu Phe Trp Leu Glu Lys Tyr His Val Asp Gly Leu Arg Val
       290                 295                 300
   Asp Ala Val Ala Ser Met Leu Tyr Arg Asp Tyr Ser Arg Lys Glu Trp
   305                 310                 315                 320
   Thr Pro Asn Ile Phe Gly Gly Arg Glu Asn Leu Glu Ala Ile Asp Phe
                   325                 330                 335
   Ile Lys Lys Phe Asn Glu Thr Val Tyr Leu His Phe Pro Glu Ala Met
               340                 345                 350
   Thr Ile Ala Glu Glu Ser Thr Ala Trp Pro Gly Val Ser Ala Pro Thr
           355                 360                 365
   Tyr Asn Asn Gly Leu Gly Phe Leu Tyr Lys Trp Asn Met Gly Trp Met
       370                 375                 380
   His Asp Thr Leu Asp Tyr Ile Gln Arg Asp Pro Ile Tyr Arg Lys Tyr
   385                 390                 395                 400
   His His Asp Glu Leu Thr Phe Ser Leu Trp Tyr Ala Phe Ser Glu His
                   405                 410                 415
   Tyr Val Leu Pro Leu Ser His Asp Glu Val Val His Gly Lys Gly Ser
               420                 425                 430
   Leu Trp Gly Lys Met Pro Gly Asp Asp Trp Gln Lys Ala Ala Asn Leu
           435                 440                 445
   Arg Leu Leu Phe Gly His Met Trp Gly His Pro Gly Lys Lys Leu Leu
       450                 455                 460
   Phe Met Gly Gly Glu Phe Gly Gln His His Glu Trp Asn His Asp Thr
   465                 470                 475                 480
   Gln Leu Glu Trp His Leu Leu Asp Gln Pro Tyr His Arg Gly Ile Gln
                   485                 490                 495
   Leu Trp Val Cys Asp Leu Asn His Leu Tyr Arg Thr Asn Pro Ala Leu
               500                 505                 510
   Trp His Asp Gly Pro Glu Gly Phe Glu Trp Ile Asp Phe Ser Asp Arg
           515                 520                 525
   Asp Gln Ser Val Ile Cys Tyr Leu Arg Lys Asn Ala Gly Arg Met Leu
       530                 535                 540
   Leu Phe Val Leu Asn Phe Thr Pro Val Pro Arg Glu His Tyr Arg Val
   545                 550                 555                 560
   Gly Val Pro Ile Gly Gly Pro Trp His Glu Val Leu Asn Ser Asp Ala
                   565                 570                 575
   Val Ala Tyr Gly Gly Ser Gly Met Gly Asn Phe Gly Arg Val Glu Ala
               580                 585                 590
   Val Pro Glu Ser Trp His Gly Arg Pro Phe His Leu Glu Leu Thr Leu
           595                 600                 605
   Pro Pro Leu Ala Ala Leu Ile Leu Glu Pro Glu His Gly
       610                 615                 620

## Description

### Reference to sequence listing

This application contains a Sequence Listing in computer readable form. The computer readable form is incorporated herein by reference.

### FIELD OF THE INVENTION

The present invention relates to a method for preparing cooked rice having retarded staling. Specifically, the present invention relates to a method for preparing boiled rice foods having a improved texture following storage.

### BACKGROUND OF THE INVENTION

Cooked rice are used in a number of popular ready prepared foods sold at food stalls and convenient stores, e.g., Japanese style products, such as sushi such as maki and nigiri, rice balls such as "Onigiri" or "Omusubi". To appeal to the customers such cooked rice products must be of a consistent quality and retain this quality until consumption.

However, when allowed to stand at room temperature or refrigerated cooked rice hardens over time. In order to prevent this deterioration of boiled rice, attempts have been made which utilize methods such as adding enzymes e.g., alpha-amylase, beta-amylase, glucoamylase, glucose oxidase, pectinase, trehalose transglutaminase and protease (EP 1108366, EP 2340732).

A number of reports have been made on the use of maltogenic alpha-amylase in breads and it is known that maltogenic alpha-amylase has an effect of improving shelf life of bread and other leavened baked products (WO 1991/04669).

However, cooked rice is a food that is completely different from bread and, therefore, the effect achieved by adding maltogenic alpha-amylase to cooked rice would largely be expected to differ from those achieved by adding the same to bread.

EP1736061 discloses that retrogradation of cooked rice can be avoided by adding enzyme EC 2.4.1.18 during soaking, after soaking, before or after cooking.

Chang-Ho Lee et al; Effects of starch hydrolysing enzymes on the textural properties of rice, FOODS AND BIOTECHNOLOGY, KR, Vol. 4, No. 3, (1995-01), p. 159-163, ISSN: 1225-5173 describes the application of Novamyl to retard retrogradation of rice cake. The enzyme was applied to presoaked rice after roll-milling and before steaming. However,

The object of the present invention is to provide boiled rice foods having improved texture following storage at room temperature or refrigeration for up to several days.

### SUMMARY OF THE INVENTION

As a result of intensive study to solve the object described above, the present inventors has found that by applying a maltogenic alpha-amylase according to claim 1, the deterioration in the quality of boiled rice with respect to texture caused by storage, can be prevented to a far greater extent than that achieved by the conventional method.

Accordingly, the invention provides a method for preparing cooked rice having retarded staling according to claim 1 which comprises the steps of: (a) contacting rice species with an aqueous solution of an enzyme comprising a maltogenic alpha-amylase according to claim 1; and (b) cooking the rice species, wherein the rice species is of Oryza sp.

### DETAILED DESCRIPTION OF THE INVENTION

The rice applied in the method of the present invention is *Oryza* sp., preferably any of *Oryza sativa* (Asian rice) or *O*. *glaberrima* (African rice). Most preferred is rice of *Oryza sativa* subsp. *japonica* and subsp. *indica.* Most preferably the rice is polished rice.

The term "retarded staling" indicates a detectable reduction in hardness and/or stickiness following storage for up to 12 hours, up to 24 hours, up to 36 hours or even up to 48 hours (2 days) or longer. The reduction in hardness may be determined by use of a Texture Analyzer as described in the Materials and Methods section. The reduction in hardness after 1 day and/or after 2 days is preferably at least 5%, 10%, 15%, 20% or even 25% relative to control.

The term "maltogenic alpha-amylase" includes amylases within EC 3.2.1.133. The maltogenic alpha-amylase catalyzes hydrolysis of (1→4)-α-D-glucosidic linkages in polysaccharides so as to remove successive α-maltose residues from the non-reducing ends of the chains.

The maltogenic alpha-amylase may be derived from *Bacillus stearothermophilus,* e.g. strain NCIB 11837 described in EP 120693, or it may be a variant described in WO 1999/043794, WO 2006/032281 or WO 2008/148845.

The maltogenic alpha-amylase may be derived from *Alicyclobacillus pohliae,* e.g. from strain NCIMB 14276 described in Imperio et al. (2008) Int J Syst Evol Microbiol 58, 221-225. The maltogenic alpha-amylase may be the enzyme disclosed in US 8,426,182.

The maltogenic alpha-amylase preparation may be obtained from a strain of B. *stearothermophilus*, or from a genetically manipulated strain of a suitable bacterial production organism.

The maltogenic alpha-amylase has an amino acid sequence that is at least 75%, at least 80%, at least 85%, at least at least 90%, at least 95%, at least 96%, at least 97%, at least 98%, at least 99%, or even 100% identical to the amino acid sequence in SEQ ID NO: 2.

The maltogenic alpha-amylase is typically used at a dosage of 200-50000 MANU per kg of dry solids in the rice, particularly 500-10000 MANU/kg.

The term "branching enzyme" includes enzymes within E.C. 2.4.1.18. The branching enzyme transfers a segment of a (1→4)-α-D-glucan chain to a primary hydroxy group in a similar glucan chain.

The branching enzyme may be derived from of *Rhodothermus obamensis*, or *R. marinus* such as the branching enzyme disclosed as SEQ ID NO: 2 in WO 2000/58445. Preferably the branching enzyme has an amino acid sequence that is at least 75%, at least 80%, at least 85%, at least at least 90%, at least 95%, at least 96%, at least 97%, at least 98%, at least 99%, or even 100% identical to SEQ ID NO: 3 (identical to SEQ ID NO: 2 in WO 2000/58445).

Other suitable branching enzymes may be derived from *Aquifex aeolicus* such as the branching enzyme disclosed in SEQ ID NO: 1 in JP 2000316581 or from *Bacillus stearothermophilus* such as the branching enzyme disclosed in EP 418945.

The rice may be soaked before cooking. The length of the soaking step may be between 10 minutes and 24 hours, preferably between 1 and 12 hours. The soaking step may preferably be performed at a temperature between 5 and 30°C, such as e.g., at a temperature of around 20°C.

In the method for producing the cooked rice food according to the invention, any conventional cooking process can be used, e.g., soaking rice in water, and boiling it in a lidded pot, a rice cooker, or a rice boiler.

Rice may be cooked by heating in boiling water or steam, or a combination (boiling until water evaporates, then continuing in steam generated by continued heating). Cooking may be performed at atmospheric or elevated pressure. During cooking the rice absorbs a great deal of water in the process, expanding its volume and using up the cooking water. The cooking time for raw rice (not parboiled) ranges from about 15 minutes up to 1 hour, depending upon type and freshness of rice, and rice cooking equipment used.

The treatment of rice with enzyme(s) may be conducted at any stage prior to cooking, during cooking or after cooking of the rice. Namely, the enzyme(s) may be added to soaking water in which rice is to be soaked to absorb water. Alternatively, the enzyme(s) may be added at a point between soaking and cooking.

In an embodiment, the boiled rice food of the present invention may further contain edible acetic acid and/or edible oils. Conventional vinegar is preferably used. Edible acetic acid may be added in an amount of 0.1 to 5% by weight, preferably 0.5 to 4% by weight, more preferably 1 to 3% by weight relative to raw rice. Edible oils may be added in an amount of 0.1 to 5% by weight, preferably 0.5 to 4% by weight, more preferably 1 to 3% by weight relative to the amount of raw rice. The edible acetic acid and/or edible oils may be added before, during or after cooking.

When the enzyme(s) is applied as defined above, it is possible to produce a cooked rice food which has excellent qualities immediately after the production and suffers from less degradation in the qualities with the passage of time.

### The additional enzymes

Optionally, one or more additional enzymes may be used together with the maltogenic alpha-amylase in the method of the invention. The additional enzymes include amylase, glucanase, galactanase, mannanase, aminopeptidase, alpha-amylase, beta-amylase, carboxypeptidase, catalase, chitinase, cutinase, cyclodextrin glycosyltransferase, deoxyribonuclease, esterase, alpha-galactosidase, beta-galactosidase, glucoamylase, alpha-glucosidase, beta-glucosidase, hemicellulase, haloperoxidase, invertase, laccase, lipase, phospholipase, mannosidase, oxidase, pectinolytic enzymes, peptidoglutaminase, peroxidase, phytase, glucose oxidase, polyphenoloxidase, protease, ribonuclease, and transglutaminase.

Glucoamylases suitable for use in the present invention include glucoamylases having a sequence identity of at least 50%, at least 60%, at least 65%, at least 70%, at least 75%, at least 80%, at least 85%, at least 90%, at least 95%, at least 96%, at least 97%, at least 98%, or at least 99% to the amino acid sequence of the *A. niger* G1 or G2 glucoamylase (Boel et al. (1984), EMBO J. 3 (5), p. 1097-1102), the *A. awamori* glucoamylase disclosed in WO 1984/02921, or the *A. oryzae* glucoamylase (Agric. Biol. Chem. (1991), 55 (4), p. 941-949).

The alpha-amylase may be fungal or bacterial, *e.g.,* an alpha-amylase from *Bacillus*, *e.g., B. licheniformis* or *B*. *amyloliquefaciens*, a beta-amylase, *e.g.,* from plant (*e.g.,* soy bean) or from microbial sources (*e.g*., *Bacillus*), a glucoamylase, *e.g.,* from *A. niger,* or a fungal alpha-amylase, *e.g*., from *A. oryzae.*

Suitable commercial fungal alpha-amylase compositions include, *e.g.,* BAKEZYME® P 300 (available from DSM) and FUNGAMYL® 2500 SG, FUNGAMYL® 4000 BG, FUNGAMYL® 800 L, FUNGAMYL® ULTRA BG and FUNGAMYL® ULTRA SG (available from Novozymes A/S). The amylase may be a non-maltogenic exo-amylase (glucan 1,4-alpha-maltotetrahydrolase (EC 3.2.1.60)), *e.g.,* one derived from *Pseudomonas saccharophilia* and variants thereof such as disclosed in WO 1999/050399, WO 2004/111217 and WO 2005/003339. Suitable commercial non-maltogenic exo-amylases include POWERFRESH® G4 and POWERFRESH® G+.

The glucose oxidase may be a fungal glucose oxidase, in particular an *Aspergillus niger* glucose oxidase (such as GLUZYME®, available from Novo Nordisk A/S, Denmark).

The hemicellulase may be a pentosanase, *e.g.,* a xylanase which may be of microbial origin, *e*.*g*., derived from a bacterium or fungus, such as a strain of *Aspergillus*, in particular of A. aculeatus, A. niger, *A. awamori*, or *A. tubigensis*, from a strain of *Trichoderma*, *e.g*., *T. reesei,* or from a strain of *Humicola, e.g*., *H. insolens.* Suitable commercially available xylanase preparations for use in the present invention include PENTOPAN® MONO BG and PENTOPAN® 500 BG (available from Novozymes), GRINDAMYL® POWERBAKE (available from Danisco), and BAKEZYME® BXP 5000 and BAKEZYME® BXP 5001 (available from DSM).

The protease may be from *Bacillus, e.g*., *B. amyloliquefaciens.*

The phospholipase may have phospholipase A1, A2, B, C, or D activity; it may or may not have lipase activity and it may or may not have galactolipase activity. It may be of animal origin, *e*.*g*., from pancreas, snake venom or bee venom, or it may be of microbial origin, *e.g*., from filamentous fungi, yeast or bacteria, such as *Aspergillus or Fusarium*, *e.g*., *A. niger, A. oryzae* or *F. oxysporum*. A lipase/phospholipase from *Fusarium oxysporum* is disclosed in WO 1998/26057. Also, the variants described in WO 2000/32758 may be used. A porcine pancreatic phospholipase A2 is shown in SEQ ID NO: 2 herein. Suitable phospholipase A2 compositions are LIPOPAN® F and LIPOPAN® XTRA (available from Novozymes) or PANAMORE® GOLDEN and PANAMORE® SPRING (available from DSM).

The additional enzyme may be of any origin, including mammalian and plant, and preferably of microbial (bacterial, yeast or fungal) origin and may be obtained by techniques conventionally used in the art.

### Use of cooked rice

The cooked rice prepared according to the to the invention may be used for producing any kind of rice based ready prepared foods, e.g., sushi such as maki and nigiri, rice balls such as onigiri or omusubi, lunch box such as bento and eki ben etc. Furthermore, disclosed are cooked rice products produced by freezing, aseptic-packing, retort pouch-packing, drying or canning these foods.

In a preferred embodiment the rice is *Oryza sativa* subsp. *Japonica,* the maltogenic alpha-amylase has an amino acid sequence that is at least 95% identical to the amino acid sequence in SEQ ID NO: 2, the rice is soaked in the aqueous enzyme solution before cooking in the soaking water. The reduction obtained in hardness after 1 day and/or after 2 days is at least 10% relative to control.

### EXAMPLES

### Materials and Methods

### Determination of maltogenic alpha-amylase activity

One MANU (Maltogenic Amylase Novo Unit) may be defined as the amount of enzyme required to release one µmol of maltose per minute at a concentration of 10 mg of maltotriose substrate (≥95% pure, e.g., Sigma M 8378) per ml of 0.1 M citrate buffer, pH 5.0 at 37°C for 30 minutes.

### Determination of branching enzyme activity

The branching enzyme activity may be determined as described in EP 418 945.

### Texture analysis

Texture analysis of single rice kernels was performed using a TA-XT2i (SMS) with 90% compression of the rice kernel, Probe: 10 mm diameter cylinder (delrin). Pre-test speed: 1 mm/sec, Test speed: 0.2 mm/sec, Post-test speed: 0.2 mm/sec.

### Enzymes

An enzyme preparation comprising a maltogenic alpha-amylase from *B. stearothermophilus,* having the amino acid sequence shown in SEQ ID NO: 2. The enzyme preparation had an activity of 10000 MANU/g.

An enzyme preparation comprising a branching enzyme derived from of *Rhodothermus obamensis* having the amino acid sequence shown in to SEQ ID NO: 3 (identical to SEQ ID NO: 2 in WO 2000/58445).

### Example 1

### Procedure of the test:

160 g of uncooked rice (*Oryza sativa* subsp. *japonica*) was washed in tap water and soaked in 190 ml water or 190 ml water with enzyme preparation in 0.1% dose (w/w) relative to the rice overnight at room temperature. The soaked rice was transferred to a rice cooker and cooked. After cooking the cooked rice was stored at 4 or 20°C. At time 0 and after 1 and 2 days storage the texture of one intact cooked rice kernel was evaluated. Texture analysis was performed at room temperature, with 10 replications for each treatment. The results are shown in table 1a, table 1b and table 2.

| Table 1a | | | |
|---|---|---|---|
| Firmness (g) | 0 day | 1 day at 4°C | 2 days at 4°C |
| Control | 1000±174a | 3459±542a | 4175±473a |
| 0.1% maltogenic alpha-amylase | 1114±184a | 2729±324b | 3555±353b |
| a, b: values with different letters are significantly different (p < 0.05). | | | |

| Table 1b | | | |
|---|---|---|---|
| Firmness (g) | 0 day | 1 day at 20°C | 2 days at 20°C |
| Control | 1813±548a | 3113±954a | 2920±702a |
| 0.1% maltogenic alpha-amylase | 1543±402a | 1804±315b | 2020±312b |
| a, b: values with different letters are significantly different (p < 0.05). | | | |

| Table 2 | | | |
|---|---|---|---|
| Firmness (g) | 0 day | 1 day at 4°C | 2 days at 4°C |
| Control | 2126±197a | 3378±558a | 3847±353a |
| 0.1% maltogenic alpha-amylase | 2070±231a | 2707±155b | 2603±366b |
| 0.1% branching enzyme | 2072±190a | 2577±412b | 2115±280c |
| 0.1% branching enzyme + 0.1% maltogenic alpha-amylase | 2156±279a | 2604±449b | 2664±205b |
| a, b, c: values with different letters are significantly different (p < 0.05). | | | |

## Claims

1. A method for preparing cooked rice having retarded staling which comprises the steps of:
(a) contacting rice species with an aqueous enzyme solution comprising a maltogenic alpha-amylase, wherein the maltogenic alpha-amylase has an amino acid sequence that is at least 75% identical to the amino acid sequence in SEQ ID NO: 2; and
(b) cooking the rice species, and
wherein the rice species is of Oryza sp.

2. The method of claim 1, wherein the contacting of the rice species with the aqueous enzyme solution is performed during cooking.

3. The method according to any of claims 1 to 2, wherein step (a) comprises soaking the rice species in the aqueous enzyme solution before cooking.

4. The method according to any of claims 1 to 3, wherein the soaking water is used for cooking the rice species.

5. The method of any of claims 1 to 4, wherein soaking the rice species in the aqueous enzyme solution is performed over a period of between 10 minutes and 24 hours, preferably between 1 and 12 hours.

6. The method of any of claims 1 to 5, wherein soaking the rice species in the aqueous enzyme solution is performed at a temperature of between 5 and 30°C, such as e.g., at a temperature of around 20°C.

7. The method of any of claims 1 to 6, wherein the enzyme solution additionally comprises a branching enzyme.

8. The method of claim 7, wherein the branching enzyme has an amino acid sequence that is at least 75%, at least 80%, at least 85%, at least at least 90%, at least 95%, at least 96%, at least 97%, at least 98%, at least 99%, or even 100% identical to the amino acid sequence in to SEQ ID NO: 3.

9. The method according to any of claims 1 to 8, wherein one or more other additional enzymes are present in the aqueous solution, wherein the other enzyme(s) is/are selected from the group consisting of amylase, glucanase, galactanase, mannanase, aminopeptidase, alpha-amylase, maltogenic alpha-amylase, beta-amylase, carboxypeptidase, catalase, chitinase, cutinase, cyclodextrin glycosyltransferase, deoxyribonuclease, esterase, alpha-galactosidase, beta-galactosidase, glucoamylase, alpha-glucosidase, beta-glucosidase, hemicellulase, haloperoxidase, invertase, laccase, lipase, phospholipase, mannosidase, oxidase, pectinolytic enzymes, peptidoglutaminase, peroxidase, phytase, glucose oxidase, polyphenoloxidase, protease, ribonuclease, and transglutaminase.

10. The method according to any of claims 1 to 9, wherein the rice specis is of *Oryza sativa* (Asian rice) or *Oryza glaberrima* (African rice), most preferably any of *Oryza sativa* subsp. *japonica* and subsp. *indica.*

11. The method according to any of claims 1 to 10, wherein the rice species is polished rice.

12. The method according to any of claims 1 to 11, wherein the rice species is parboiled rice.

13. The method according to any of claims 1 to 12, wherein the reduction in hardness after 1 day and/or after 2 days at least 5%, 10%, 15%, 20% or even 25% relative to control.

## Patentansprüche

1. Verfahren zur Herstellung von gekochtem Reis mit verzögertem Altwerden, umfassend die Schritte:
(a) Inkontaktbringen von Reisspezies mit einer wässrigen Enzymlösung, die eine maltogene alpha-Amylase umfasst, wobei die maltogene alpha-Amylase eine Aminosäuresequenz aufweist, die wenigstens 75 % identisch mit der Aminosäuresequenz in SEQ ID NO:2 ist; und
(b) Kochen der Reisspezies und
wobei die Reisspezies von Oryza sp. ist.

2. Verfahren gemäß Anspruch 1, wobei das Inkontaktbringen der Reisspezies mit der wässrigen Enzymlösung während des Kochens durchgeführt wird.

3. Verfahren gemäß einem der Ansprüche 1 bis 2, wobei Schritt (a) Einweichen der Reisspezies in der wässrigen Enzymlösung vor dem Kochen umfasst.

4. Verfahren gemäß einem der Ansprüche 1 bis 3, wobei das Einweichwasser zum Kochen der Reisspezies verwendet wird.

5. Verfahren gemäß einem der Ansprüche 1 bis 4, wobei Einweichen der Reisspezies in der wässrigen Enzymlösung über einen Zeitraum zwischen 10 Minuten und 24 Stunden, vorzugsweise zwischen 1 und 12 Stunden, durchgeführt wird.

6. Verfahren gemäß einem der Ansprüche 1 bis 5, wobei Einweichen der Reisspezies in der wässrigen Enzymlösung bei einer Temperatur von zwischen 5 und 30 °C, wie z. B. bei einer Temperatur von etwa 20 °C, durchgeführt wird.

7. Verfahren gemäß einem der Ansprüche 1 bis 6, wobei die Enzymlösung zusätzlich ein Verzweigungsenzym umfasst.

8. Verfahren gemäß Anspruch 7, wobei das Verzweigungsenzym eine Aminosäuresequenz aufweist, wie wenigstens 75 %, wenigstens 80 %, wenigstens 85 %, wenigstens 90 %, wenigstens 95 %, wenigstens 96 %, wenigstens 97 %, wenigstens 98 %, wenigstens 99 % oder sogar 100 % identisch mit der Aminosäuresequenz in SEQ ID NO:3 ist.

9. Verfahren gemäß einem der Ansprüche 1 bis 8, wobei ein oder mehrere zusätzliche Enzyme in der wässrigen Lösung vorhanden sind, wobei das/die andere(n) Enzym(e) ausgewählt ist/sind aus der Gruppe bestehend aus Amylase, Glucanase, Galactanase, Mannanase, Aminopeptidase, alpha-Amylase, maltogener alpha-Amylase, beta-Amylase, Carboxypeptidase, Catalase, Chitinase, Cutinase, Cyclodextringlycosyltransferase, Desoxyribonuklease, Esterase, alpha-Galactosidase, beta-Galactosidase, Glucoamylase, alpha-Glucosidase, beta-Glucosidase, Hemicellulase, Haloperoxidase, Invertase, Laccase, Lipase, Phospholipase, Mannosidase, Oxidase, pectinolytischen Enzymen, Peptidoglutaminase, Peroxidase, Phytase, Glucoseoxidase, Polyphenoloxidase, Protease, Ribonuklease und Transglutaminase.

10. Verfahren gemäß einem der Ansprüche 1 bis 9, wobei die Reisspezies von *Oryza sativa* (asiatischer Reis) oder *Oryza glaberrima* (afrikanischer Reis) ist, höchst bevorzugt eine von *Oryza sativa* subsp. *japonica* und subsp. *indica.*

11. Verfahren gemäß einem der Ansprüche 1 bis 10, wobei die Reisspezies polierter Reis ist.

12. Verfahren gemäß einem der Ansprüche 1 bis 11, wobei die Reisspezies angekochter Reis ist.

13. Verfahren gemäß einem der Ansprüche 1 bis 12, wobei die Verringerung der Härte nach 1 Tag und/oder nach 2 Tagen wenigstens 5 %, 10 %, 15 %, 20 % oder sogar 25 % bezogen auf eine Kontrolle ist.

## Revendications

1. Méthode de préparation de riz cuit ayant un rassissement retardé, comprenant les étapes :
(a) de mise en contact d'une espèce de riz avec une solution enzymatique aqueuse comprenant une alpha-amylase maltogénique, où l'alpha-amylase maltogénique possède une séquence d'acides aminés ayant une identité d'au moins 75% par rapport à la séquence d'acides aminés de SEQ ID n° 2 ; et
(b) de cuisson de l'espèce de riz; et
où l'espèce de riz appartient à *Oryza* sp.

2. Méthode selon la revendication 1, dans laquelle la mise en contact de l'espèce de riz avec la solution enzymatique aqueuse est effectuée lors de la cuisson.

3. Méthode selon l'une quelconque des revendications 1 à 2, dans laquelle l'étape (a) comprend le trempage de l'espèce de riz dans la solution enzymatique aqueuse avant cuisson.

4. Méthode selon l'une quelconque des revendications 1 à 3, dans laquelle l'eau de trempage est utilisée pour cuire l'espèce de riz.

5. Méthode selon l'une quelconque des revendications 1 à 4, dans laquelle le trempage de l'espèce de riz dans la solution enzymatique aqueuse est effectué sur une période comprise entre 10 minutes et 24 heures, préférablement entre 1 et 12 heures.

6. Méthode selon l'une quelconque des revendications 1 à 5, dans laquelle le trempage de l'espèce de riz dans la solution enzymatique aqueuse est effectué à une température comprise entre 5 et 30°C, tel que par exemple à une température d'environ 20°C.

7. Méthode selon l'une quelconque des revendications 1 à 6, dans laquelle la solution enzymatique comprend en outre une enzyme de ramification.

8. Méthode selon la revendication 7, dans laquelle l'enzyme de ramification possède une séquence d'acides aminés ayant une identité d'au moins 75%, d'au moins 80%, d'au moins 85%, d'au moins 90%, d'au moins 95%, d'au moins 96%, d'au moins 97%, d'au moins 98%, d'au moins 99%, voire de 100%, par rapport à la séquence d'acides aminés de SEQ ID n° 3.

9. Méthode selon l'une quelconque des revendications 1 à 8, dans laquelle une ou plusieurs autres enzymes supplémentaires sont présentes dans la solution aqueuse, où la ou les autres enzymes sont choisies dans le groupe constitué par une amylase, une glucanase, une galactanase, une mannanase, une aminopeptidase, une alpha-amylase, une alpha-amylase maltogénique, une bêta-amylase, une carboxypeptidase, une catalase, une chitinase, une cutinase, une cyclodextrine glycosyl-transférase, une désoxyribonucléase, une estérase, une alpha-galactosidase, une bêta-galactosidase, une glucoamylase, une alpha-glucosidase, une bêta-glucosidase, une hémicellulase, une halogénoperoxydase, une invertase, une laccase, une lipase, une phospholipase, une mannosidase, une oxydase, les enzymes pectinolytiques, une peptidoglutaminase, une peroxydase, une phytase, une glucose oxydase, une polyphénol oxydase, une protéase, une ribonucléase, et une transglutaminase.

10. Méthode selon l'une quelconque des revendications 1 à 9, dans laquelle l'espèce de riz appartient à *Oryza sativa* (riz asiatique) ou *Oryza glaberrima* (riz africain), tout préférablement l'un quelconque parmi *Oryza sativa* subsp. *japonica* et subsp. *indica.*

11. Méthode selon l'une quelconque des revendications 1 à 10, dans laquelle l'espèce de riz est un riz poli.

12. Méthode selon l'une quelconque des revendications 1 à 11, dans laquelle l'espèce de riz est un riz étuvé.

13. Méthode selon l'une quelconque des revendications 1 à 12, dans laquelle la réduction de dureté après 1 jour et/ou après 2 jours est d'au moins 5%, 10%, 15%, 20% voire 25% par rapport au témoin.
